(19) **Europäisches Patentamt**

**European Patent Office**

**Office européen des brevets**

(11) Veröffentlichungsnummer: **0 094 975**
**B1**

(12) **EUROPÄISCHE PATENTSCHRIFT**

(45) Veröffentlichungstag der Patentschrift:
**23.04.86**

(21) Anmeldenummer: **82104458.3**

(22) Anmeldetag: **21.05.82**

(51) Int. Cl.⁴: **A 01 B 59/048**, A 01 B 63/108

(54) **Vertikal schwenkbare Geräteaufnahmevorrichtung.**

(43) Veröffentlichungstag der Anmeldung:
**30.11.83 Patentblatt 83/48**

(45) Bekanntmachung des Hinweises auf die Patenterteilung:
**23.04.86 Patentblatt 86/17**

(84) Benannte Vertragsstaaten:
**AT DE FR GB IT SE**

(56) Entgegenhaltungen:
**EP - A - 0 063 167**
**DE - A - 2 758 978**
**US - A - 3 616 863**

(73) Patentinhaber: **DEERE & COMPANY, 1 John Deere Road, Moline Illinois 61265 (US)**

(72) Erfinder: **Weiss, Heinz, Dipl.-Ing., Volkerstrasse 24, D-6140 Bensheim (DE)**

(74) Vertreter: **Feldmann, Bernhard et al, DEERE & COMPANY European Office, Patent Department Steubenstrasse 36-42 Postfach 503, D-6800 Mannheim 1 (DE)**

ACTORUM AG

## Beschreibung

Die Erfindung betrifft eine vertikal schwenkbare Geräteaufnahmevorrichtung, die sich an eine Frontverkleidung einer landwirtschaftlich nutzbaren Maschine, insbesondere eines Ackerschleppers anschliesst und zwei untere und mindestens einen oberen Lenker mit fahrzeugseitigen und geräteseitigen gegebenenfalls einen Kupplungsrahmen aufnehmenden Anlenkpunkten enthält.

Bei dieser Geräteaufnahmevorrichtung (DE-A-2 758 978) sind die geräteseitig über einen Kupplungsrahmen verbundenen Lenker fahrzeugseitig an einem Gussteil schwenkbar aufgehängt und werden mittels eines Hubzylinders, der zylinderseitig an dem Gussteil und kolbenseitig an einer mit den unteren Lenkern verbundenen Hubwelle angreift, in der Höhe verstellt. Die Anordnung des Gussteils an dem Vorderachsbock eines Ackerschleppers mit den sich entsprechend weit nach vorne erstreckenden Lenkern gewährt eine einfache Nachrüstung eines normal ausgerüsteten Ackerschleppers durch blosses Anschrauben der Geräteaufnahmevorrichtung vor den Ackerschlepper.

Die Erfahrung beim Einsatz derartig vorgebauter Geräteaufnahmevorrichtungen zeigt jedoch, dass der weit nach vorne ragende Kupplungsrahmen eine nicht unerhebliche Unfallgefahr bedeutet, weshalb auch seitens des Gesetzgebers entsprechende Schutzmassnahmen bei Strassenfahrten vorgeschrieben werden. Ohne Verwendung eines Kupplungsrahmens sind die Lenker entweder zu entfernen oder soweit zu verschwenken, dass sie keine Unfallgefahr mehr bieten.

Ferner leidet die Manövrierfähigkeit eines derart ausgerüsteten Ackerschleppers, und bei Verwendung eines frontseitigen Zugmauls ist die Demontage des Kupplungsrahmens erforderlich.

Es ist daher die der Erfindung zugrundeliegende Aufgabe, eine vertikal schwenkbare Geräteaufnahmevorrichtung derart anzuordnen, dass im Bedarfsfall, d.h. insbesondere bei Transportfahrten auf der Strasse die Lenker, gegebenenfalls mit dem Kupplungsrahmen eine Position einnehmen können, in der eine möglichst geringe Unfallgefahr besteht und in der die volle Manövrierfähigkeit auch bei Benutzung des frontseitigen Zugmauls gewährt bleibt, während andererseits keine Beschränkungen beim Arbeitseinsatz eintreten dürfen. Diese Position soll ohne Umrüstung durch einfaches Verschwenken der Geräteaufnahmevorrichtung zu erzielen sein, um die Vorteile hinsichtlich der verminderten Unfallgefahr nicht durch umständliche Handhabung zu vergeben.

Diese Aufgabe wird erfindungsgemäss gelöst durch eine derartige Anordnung der Lenker, dass deren geräteseitigen Anlenkpunkte, gegebenenfalls mit dem Kupplungsrahmen, gegen die Frontverkleidung zur Anlage bringbar bzw. in diese versenkbar sind. Auf diese Weise ist es möglich, die gesamte Geräteaufnahmevorrichtung gegebenenfalls mit Kupplungsrahmen als ein Teil der Frontverkleidung oder als ein diese verdeckendes flaches Teil auszubilden, wodurch die Unfallgefahr durch vorstehende Teile auf ein Minimum reduziert wird. Die Längenabmessung des Ackerschleppers vergrössert sich in dem einen Fall überhaupt nicht, im anderen Fall nur unwesentlich, so dass auch die Forderungen bezüglich der Manövrierfähigkeit erfüllt sind.

Mehrere nachfolgend näher beschriebene Ausführungsbeispiele der Erfindung sind in der Zeichnung dargestellt. Es zeigt:

Fig. 1 einen Ackerschlepper im Längsschnitt und Seitenansicht mit der Geräteaufnahmevorrichtung nach der Erfindung;

Fig. 2 den Vorderteil des in Fig. 1 dargestellten Ackerschleppers in Seitenansicht und Längsschnitt mit geänderter Anordnung eines die Geräteaufnahmevorrichtung verschwenkenden Hydraulikzylinders;

Fig. 3 eine Vorderansicht des mit der Geräteaufnahmevorrichtung nach der Erfindung ausgerüsteten Ackerschleppers;

Fig. 4 eine Draufsicht der an dem Vorderteil des Ackerschleppers angeordneten Geräteaufnahmevorrichtung;

Fig. 5 eine Draufsicht einer weiteren in dem Vorderteil des Ackerschleppers angeordneten Geräteaufnahmevorrichtung.

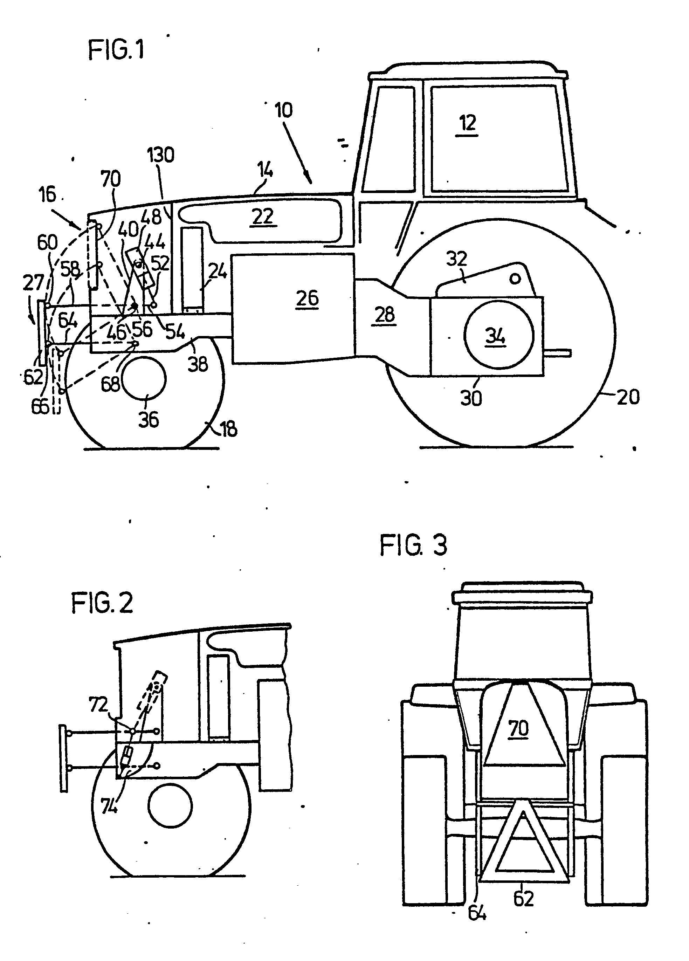

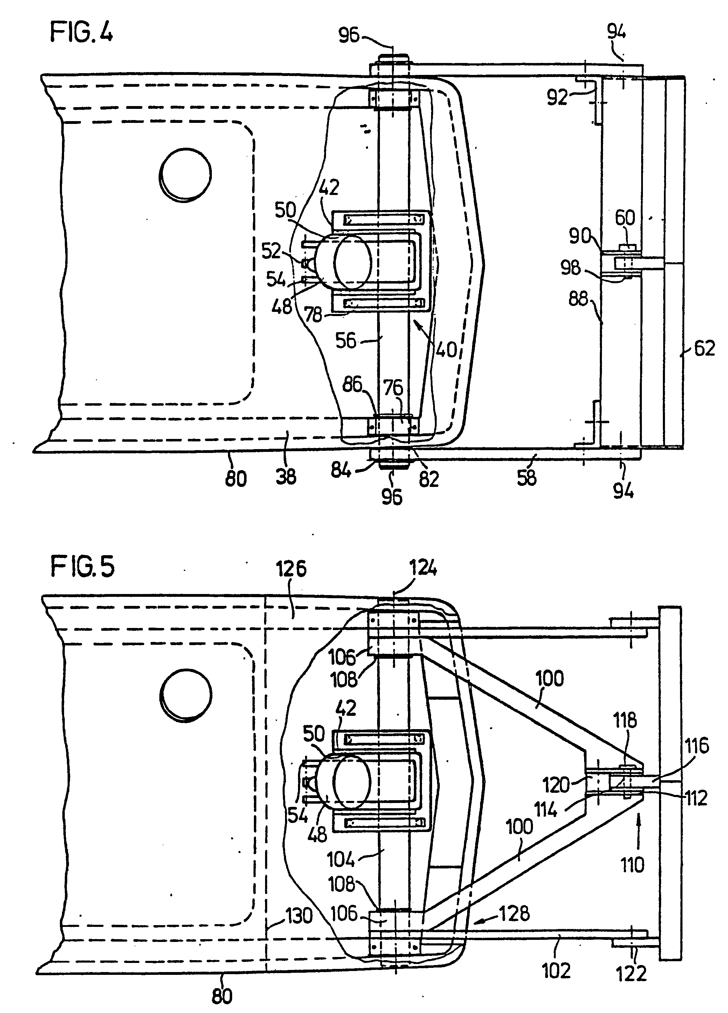

Fig. 1 zeigt einen Ackerschlepper 10, dessen äussere Konturen im wesentlichen von einer Kabine 12, einer Motorhaube 14, einer Frontverkleidung 16, Vorderrädern 18 und Hinterrädern 20 bestimmt werden. Unterhalb der Motorhaube 14 ist ein Kraftstofftank 22 vorgesehen, der sich über einem Kühler 24 und einem Verbrennungsmotor 26 erstreckt, wodurch zwischen dem Kühler 24 und der Frontverkleidung 16 gegenüber der herkömmlichen Anordnung ein Freiraum entsteht, der für den Anbau einer Geräteaufnahmevorrichtung 27 bestimmt ist. Selbstverständlich kann der Kraftstofftank 22 auch an irgendeiner anderen passenden Stelle untergebracht sein - es muss lediglich der vorne erwähnte Freiraum erhalten bleiben. An den Verbrennungsmotor 26 schliesst sich rückwärtig ein Kupplungsgehäuse 28 an, das mit einem Getriebegehäuse 30 verbunden ist. Letzteres ist wiederum mit einem Krafthebergehäuse 32 und beidseitig angeordneten Achsrichtern 34 zum Antrieb der Hinterräder 20 bestückt. Hingegen sind die angetriebenen oder nicht angetriebenen Vorderräder 18 von einer Vorderachse 36 aufgenommen, die über nicht dargestellte Lager an einem wannenförmigen Vorderachsbock 38 pendelnd aufgehängt ist. Auf diesem Vorderachsbock 38 kann ein Halter 40 durch Schweissen, Nieten oder Schrauben befestigt sein, der symmetrisch zur vertikalen Längsmittelebene des Ackerschleppers 10 zwei voneinander getrennte, nach oben gerichtete Schenkel 42 (siehe auch Fig. 4) mit je einem oberen und einem unteren Lagerpunkt 44, 46 aufweist. Dabei dienen die oberen Lagerpunkte 44 der Aufnahme eines normalerweise einfachwirkenden Hydraulikzylinders 48, der hierzu seitlich mit Lagerzapfen 50 versehen ist. Der Halter 40 mit dem Hydraulikzylinder 48 ist günstigerweise zwischen dem Kühler 24 und der Frontverkleidung 16, also innerhalb der Motorhaube 14 vorgesehen, so dass der Hydraulikzylinder 48 in seiner Funktion und seinen Abmessungen nicht von der Vorderachse 36 oder deren Pendelbewegung beeinträchtigt wird.

Dieser Hydraulikzylinder 48 kann auch doppeltwirkend und/oder als Teleskopzylinder ausgebildet sein, wenn die Umstände dies gebieten. Der Hydraulikzylinder 48, der über nicht dargestellte Verbindungsleitungen oder Schläuche von einem ebenfalls nicht dargestellten, von der Kabine 12 aus steuerbaren Hydraulikkreislauf mit Drucköl beaufschlagt wird, nimmt einen Kolben 52 gleitend auf, der an einer gabelförmig endenden, nach hinten gerichteten Hubschwinge 54 angreift. Diese Hubschwinge 54 ist mit einer Hubwelle 56 verzahnt, verschraubt oder auf dieser aufgeschrumpft. In gleicher Weise sind zwei obere Lenker 58 wiederum mit der Hubwelle 56 verbunden und nehmen über geräteseitige Anlenkpunkte 60 eine Kupplungsvorrichtung 62 auf; ihre fahrzeugseitigen Anlenkpunkte werden von der Hubwelle 56 gebildet. Weiterhin ist die Kupplungsvorrichtung 62 an zwei unteren Lenkern 64 über geräteseitige Anlenkpunkte 66 angeschlossen, die ihrerseits fahrzeugseitige Anlenkpunkte 68 zur Anlenkung an je einem nicht gezeigten Lagerzapfen an dem Vorderachsbock 38 aufweisen. Da die fahrzeugseitigen Anlenkpunkte 68 der unteren Lenker 64 relativ weit hinten angeordnet sein sollten, kann es erforderlich werden, die Form der unteren Lenker 64 derart zu wählen, dass die Pendelbewegung der Vorderachse 36 nicht hindernd wirkt. Die Frontverkleidung 16 weist eine Nische 70 auf, deren Form im wesentlichen der Form der Kupplungsvorrichtung 62 entspricht.

Es kann auch zweckmässig erscheinen, den Hydraulikzylinder 48 nicht wie in Fig. 1 gezeigt anzuordnen, sondern an einem Lagerpunkt 72, wie es in Fig. 2 zum Ausdruck gebracht wird. Bei Anordnung des Lagerpunktes 72 zwischen dem unteren Lagerpunkt 46 und den geräteseitigen Anlenkpunkten 60 ist jedoch die Hubschwinge 54 nach vorne gerichtet und der Hydraulikzylinder 48 ist entweder in einer Ausnehmung 74 des Vorderachsbocks 38 oder aber in dem Halter 40 jedoch spiegelbildlich zu der Ausführung in Fig. 1 aufgehängt. Sollte die Nische 74 in dem Vorderachsbock 38 in ihrer Grösse nicht zur Aufnahme des Hydraulikzylinders 48 ausreichen, dann wird dieser durch eine nicht gezeigte Öffnung durch den Vorderachsbock 38 nach aussen geführt und dort zwischen ebenfalls nicht dargestellten Gussaugen aufgenommen. Nach alle dem besteht die Geräteaufnahmevorrichtung 27 im wesentlichen aus dem Halter 40, dem Hydraulikzylinder 48, der Hubschwinge 54, der Hubwelle 56, den oberen Lenkern 58, den unteren Lenkern 64 und gegebenenfalls dem Kupplungsrahmen 62. Aus Fig. 3 geht hervor, dass die Nische 70 die Kupplungsvorrichtung 62 bei entsprechender Schwenkbewegung, welche später noch ausführlich erläutert wird, aufnimmt.

Um diese bisher schematische Ausführung im Detail zu erläutern, wird im folgenden auf die Fig. 4 verwiesen. So ist dort die Hubwelle 56 auf jeder Seite mittels Lagerböcken 76, die auf den Vorderachsbock 38 aufgeschraubt sind und durch Lagerbügel 78, die an dem Halter 40 angeschraubt sind, gehalten. Somit ist eine genügende Kraftaufnahme gewährleistet. Zum Verbinden dieser Hubwelle 56 mit den oberen Lenkern 58 ist diese durch nicht ersichtliche Öffnungen in Seitenteilen 80 der Motorhaube 14 nach aussen geführt und nimmt dort entweder formschlüssig, also mittels Verzahnungen, Profilen und Schrauben oder kraftschlüssig d.h. durch Aufpressen oder Aufschrumpfen die oberen Lenker 58 drehfest auf. Zur Wahrung der axialen Ortsfestigkeit der oberen Lenker 58 dient jeweils eine Schulter 82 auf der Hubwelle 56 und ein Sicherungsring 84, zwischen denen sich je ein oberer Lenker 58 befindet. Die Hubwelle 56 selbst wird ebenfalls von Sicherungsringen 86 axial festgehalten.

Zwischen den der Hubwelle 56 abgelegenen Enden der oberen Lenker 58 erstreckt sich quer zur Fahrtrichtung ein angeschraubter Querbalken 88, der zwei voneinander getrennte, symmetrisch und parallel zur vertikalen Fahrzeuglängsmittelebene angeordnete Flachstege 90 mit den geräteseitigen Anlenkpunkten 60 trägt. Um die Biegesteifigkeit des Querbalkens 88 zu erhöhen, sind zwischen diesem und den oberen Lenkern 58 Winkelstücke 92 eingeschraubt.

Die unteren Lenker 64 sind in Fig. 4 von den oberen Lenkern 58 verdeckt, da sie sich genau unterhalb dieser erstrecken. Lediglich die Position deren geräteseitiger und fahrzeugseitiger Anlenkpunkte 66, 68 ist durch zugehörige Strichpunktlinien 94, 96 angedeutet. Zur Verdeutlichung der geometrischen Verhältnisse ist jedoch auszuführen, dass die vertikale Verbindung der fahrzeugseitigen und geräteseitigen Anlenkpunkte 56, 68, 60, 66 im wesentlichen ein Parallelogramm ergibt. Dabei können die geräteseitigen Anlenkpunkte 60, 66 anstatt mit dem Kupplungsrahmen 62 auch direkt mit einem in der Zeichnung nicht dargestellten anzuschliessenden Arbeitsgerät verbunden werden. Auf die Ausbildung des Kupplungsrahmens 62 wird nicht näher eingegangen, da dieser einem handelsüblichen und weithin bekannten entspricht. Zur Verbindung des Kupplungsrahmens 62 mit den geräteseitigen Anlenkpunkten 60 findet ein Bolzen 98 Verwendung, während die unteren Lenker 64 über nicht gezeichnete Zapfen oder Schnellkuppelelemente an den Kupplungsrahmen 62 angeschlossen werden.

Letztlich zeigt Fig. 5 eine Geräteaufnahmevorrichtung, deren obere und untere Lenker 100, 102 fahrzeugseitig zwischen den Seitenteilen 80 der Motorhaube 14 gelagert sind. Der Einfachheit wegen werden im Folgenden bereits beschriebene Teile mit den gleichen Ziffern und Bezeichnungen versehen.

Eine Hubwelle 104 unterscheidet sich von der bereits erwähnten Hubwelle 56 dadurch, dass sie sich einmal nur bis zu den Seitenteilen 80 erstreckt, weshalb diese keine speziellen Öffnungen aufzuweisen brauchen und zum zweiten durch die näher der Längsmittelachse des Ackerschleppers 10 gelegenen Befestigungspunkte 106 der oberen Lenker 100. Bezüglich dem Hydraulikzylinder 48, dessen Verbindung mit der Hubwelle 104, den Lagerböcken 76 und den Lagerbügeln 78 gilt das zuvor anhand der Fig. 1 bis 4 Beschriebene. Die oberen Lenker 100 werden jeweils im Bereich ihrer Befestigungspunkte 106 von in der Hubwelle 104 eingesetzten Sicherungsringen 108 axial festgehalten. Beide oberen Lenker 100 sind gleichförmig ausgebildet. Sie erstrecken sich derart abgewinkelt nach vorne, dass sie an einer Stelle auf der Längsmittelachse des Ackerschleppers 10 mit ihren geräteseitigen Enden 110 zusammentreffen, die in waagerechter Lage der Lenker oder in ihrer vollständig abgesenkten Stellung vor den Vorderrädern 18 liegt. An die Innenseite dieser geräteseitigen Enden 110 ist je eine vertikale Platte 112 angeschweisst, die mindestens eine einen geräteseitigen Anlenkpunkt bildende Bohrung 114 zur Aufnahme eines eine Kupplungsnase 116 des Kupplungsrahmens 62 durchdringenden Bolzens 118 aufweist. Zwischen diesen Platten 112 ist ein Distanzstück 120 eingefügt. Mehrere nicht gezeichnete Schrauben erstrecken sich durch gleichfalls nicht dargestellte, im gleichen Bohrbild angeordnete Bohrungen in den Platten 112 und dem Distanzstück 120 und stellen somit eine feste Verbindung der beiden oberen Lenker 100 her. Die unteren Lenker 102 erstrecken sich parallel zu der Längsmittelachse des Ackerschleppers 10 nach vorne und sind geräteseitig über nicht dargestellte Zapfen, Bolzen oder Schnellverschlusselemente an den Anschlussstellen 122 mit dem Kupplungsrahmen 62 und fahrzeugseitig über von der Hubwelle 104 verdeckte auf den Linien 124 angeordnete Gelenke in einem Vorderachsbock 126 schwenkbar angeschlossen. Dieser Vorderachsbock 126 unterscheidet sich von dem vorherigen Vorderachsbock 38 hauptsächlich durch zwei eingebrachte Schlitze 128, die eine vertikale Schwenkbewegung der oberen und unteren Lenker 100, 102 in vollem Umfang zulassen. Auch bei der Ausführung gemäss Fig. 5 ergibt die vertikale Projektion der geräteseitigen und fahrzeugseitigen Anlenkpunkte 114, 122, 106 und 124 im wesentlichen ein Parallelogramm. Da die oberen und unteren Lenker 100, 102 nach vorne aus der Motorhaube 14 herausragen, ist zu deren freier Beweglichkeit die Frontverkleidung 16 mit entsprechenden nicht gezeichneten Öffnungen versehen, die aber in oberster Position der oberen und unteren Lenker 100, 102 gegebenenfalls auch des Kupplungsrahmens 62 wiederum von diesen weitgehendst geschlossen werden.

Alternativ hierzu könnten die oberen Lenker auch parallel zur Längsmittelachse des Ackerschleppers 10 und parallel zu den unteren Lenkern 102 nach vorne geführt werden. Der hierin begründete Vorteil wäre, dass zum Austritt der oberen und unteren Lenker nach vorne zwei vertikal in der Frontverkleidung 16 eingebrachte Schlitze genügen würden.

Sollte der Kupplungsrahmen 62 nicht verwendet werden, so sind für die unteren Lenker 64 aus Fig. 1 bis 4 entsprechende Haltesicherungen für deren oberste Position vorzusehen. Um den Schmutz und den Staub, der während der Fahrt des Ackerschleppers 10 durch die Öffnungen in der Frontverkleidung 16 eintritt von dem Kühler 24 fernzuhalten, ist zwischen diesem und dem Hydraulikzylinder 48 eine Trennwand 130 eingebaut. Um einen vollkommenen Verschluss der Motorhaube 14 auf deren Stirnseite zu erreichen, kann im Falle der Nichtbenutzung der Geräteaufnahmevorrichtung 27 die Frontverkleidung 16 auch durch einen nicht gezeichneten mit Schnellverschlüssen versehenen Stirndeckel geschlossen werden. Anhand des Vorbeschriebenen lässt sich die Funktion der Geräteaufnahmevorrichtung wie folgt darstellen.

Ausgehend von der in Fig. 1 in ausgezogenen Linien angezeigten Stellung der oberen und unteren Lenker 58, 64 wird zu deren nach oben gerichteten vertikalen Schwenkbewegung der Hydraulikkolben 48 mit Drucköl beaufschlagt, so dass sich der Kolben 52 nach unten bewegt und über die Hubschwinge 54 die Hubwelle 56 in dem unteren Lagerpunkt 46 im Uhrzeigersinn dreht. Die Drehung der Hubwelle 56 wiederum bewirkt eine nach oben gerichtete Schwenkbewegung der oberen Lenker 58, die über den Kupplungsrahmen 62 die unteren Lenker 64 mitnehmen. Da wie bereits erwähnt, die geräteseitigen und fahrzeugseitigen Anlenkpunkte 60, 66, 56, 68 als Parallelogramm angeordnet sind, bewirkt die beschriebene Schwenkbewegung, dass die geräteseitigen Anlenkpunkte 60, 66 in dem ganzen Schwenkbereich stets auf einer Fallinie liegen und letztendlich in die Nische 70 der Frontverkleidung 16 bringbar sind, d.h. es findet eine Parallelverschiebung statt. Diese Parallelverschiebung wird durch die strichliert angedeuteten Stellungen der Geräteaufnahmevorrichtung 27 verdeutlicht, wobei die untere strichliert gezeichnete Position die Arbeits- oder Ankuppelposition darstellt, während die obere der Transportposition entspricht. Dabei ist diese Nische 70 derart bemessen, dass sie die geräteseitigen Anlenkpunkte 60, 66 und gegebenenfalls den Kupplungsrahmen 62 vollkommen in sich aufnimmt. In dieser Position ist die Unfallgefahr durch vorstehende und damit verkehrsgefährdende Teile auf ein Minimum reduziert. Diese integrierte Aufnahme ist sowohl bei der Geräteaufnahmevorrichtung nach Fig. 4 wie auch der nach Fig. 5 gewährleistet. Vorzugsweise kann der Kupplungsrahmen 62 derart verkleidet und lackiert sein, dass er sich optisch lückenlos in die Frontverkleidung 16 einfügt. Selbst die Ausrichtung des Ackerschleppers 10 mit einer nicht gezeigten Frontzapfwelle und der Geräteaufnahmevorrichtung 27 ist gleichzeitig möglich.

Es ist andererseits möglich, die vertikale Schwenkbewegung auch mittels eines Seilzuges, eines Pneumatikzylinders oder eines mechanischen Gestanges anstatt dem Hydraulikzylinder 48 auszuführen. Ferner kann der Kupplungsrahmen 62 nicht nur zum Aufnehmen von Arbeitsgeräten, sondern auch zur Aufnahme z.B. von Ballastgewichten ausgebildet werden.

Ausgangspunkt des vorstehenden Ausführungsbeispiels war eine senkrecht zur Fahrbahn stehende Frontverkleidung 16, weshalb die geräteseitigen und die fahrzeugseitigen Anlenkpunkte 60, 66, 114, 122, 56, 68, 106, 124 in der Form eines Parallelogramms angeordnet sind. Andererseits kann der Ackerschlepper auch mit einer schräg verlaufenden Frontverkleidung ausgerüstet sein. Um die Vorzüge der erfindungsgemässen Anordnung der fahrzeugseitigen und geräteseitigen Anlenkpunkte auch in derartigen Fällen zu erhalten ist es dann aber erforderlich, die fahrzeugseitigen und geräteseitigen Anlenkpunkte in der Form eines Trapezes anzuordnen und zwar in der Art, dass die geräteseitigen Anlenkpunkte wieder in einer Nische der Frontverkleidung versenkbar sind.

Eine Vereinfachung kann zusätzlich erzielt werden wenn die geräteseitigen Anlenkpunkte 60, 66, 114, 122 gegebenenfalls mit dem Kupplungsrahmen 62 nicht in die Nische 70 der Frontverkleidung 16 versenkbar angeordnet sind, sondern unmittelbar an einer entsprechend ausgebildeten Frontverkleidung zur Anlage kommen. Insgesamt ist es wünschens-

wert, die geräte- und die fahrzeugseitigen Anlenkpunkte 60, 66, 114, 122/56, 68, 106, 124 weitmöglichst hinten anzuordnen, um die Längenabmessungen und die Biegemomentbelastungen des Ackerschleppers 10 so gering wie möglich zu halten.

Letztlich wird darauf verwiesen, dass sich Bezeichnungen wie oben, unten, vorne, hinten, links und rechts auf die Vorwärtsfahrtrichtung des Ackerschleppers beziehen.

## Patentansprüche

1. Vertikal schwenkbare Geräteaufnahmevorrichtung, die sich an eine Frontverkleidung einer landwirtschaftlich nutzbaren Maschine, insbesondere eines Ackerschleppers anschliesst und zwei untere und mindestens einen oberen Lenker mit fahrzeugseitigen und geräteseitigen, gegebenenfalls einen Kupplungsrahmen aufnehmenden Anlenkpunkten enthält, gekennzeichnet durch eine derartige Anordnung der Lenker (58, 64; 100, 102), dass deren geräteseitigen Anlenkpunkte (60, 66; 114, 122), gegebenenfalls mit dem Kupplungsrahmen (62), gegen die Frontverkleidung (16) zur Anlage bringbar bzw. in dieser versenkbar sind.

2. Vertikal schwenkbare Geräteaufnahmevorrichtung nach Anspruch 1, dadurch gekennzeichnet, dass die Frontverkleidung (16) eine Nische (70) zur Aufnahme des Kupplungsrahmens (62) aufweist.

3. Vertikal schwenkbare Geräteaufnahmevorrichtung nach einem oder mehreren der vorherigen Ansprüche, dadurch gekennzeichnet, dass die vertikale Projektion der geräteseitigen und fahrzeugseitigen Anlenkpunkte (60, 66, 56, 68; 114, 122; 106, 124) ein Parallelogramm ergibt.

4. Vertikal schwenkbare Geräteaufnahmevorrichtung nach einem oder mehreren der vorherigen Ansprüche, dadurch gekennzeichnet, dass die oberen und die unteren Lenker (100, 102) innerhalb einer Motorhaube (14) angeordnet sind.

5. Vertikal schwenkbare Geräteaufnahmevorrichtung nach einem oder mehreren der vorherigen Ansprüche mit einer Hebevorrichtung, dadurch gekennzeichnet, dass diese als ein Hydraulikzylinder (48) ausgebildet ist, der über eine Hubschwinge (54) an einer Hubwelle (56) angreift.

6. Vertikal schwenkbare Geräteaufnahmevorrichtung nach einem oder mehreren der vorherigen Ansprüche, dadurch gekennzeichnet, dass die Frontverkleidung (16) der Bewegungsbahn der oberen und unteren Lenker (100, 102) entsprechende Öffnungen aufweist.

## Claims

1. A vertically pivotable implement carrier arrangement which adjoins a front cowling of a machine which can be used for agricultural purposes, in particular an agricultural tractor, and which includes two lower and at least one upper link with pivot points at the vehicle side and at the implement side, which pivot points possibly carry a coupling frame, characterised by an arrangement of the links (58, 64; 100, 102) such that their pivot points (60, 66; 114, 122) at the implement side, possibly with the coupling frame (62), can be brought into contact against the front cowling (16) or can be sunk thereinto.

2. A vertically pivotable implement carrier arrangement according to claim 1, characterised in that the front cowling (16) has a recess (70) for accommodating the coupling frame (62).

3. A vertically pivotable implement carrier arrangement according to one or more of the preceding claims, characterised in that the vertical projection of the pivot points (60, 66, 56, 68; 114, 122; 106, 124) on the implement side and on the vehicle side gives a parallelogramm.

4. A vertically pivotable implement carrier arrangement according to one or more of the preceding claims, characterised in that the upper and lower links (100, 102) are arranged within an engine hood (14).

5. A vertically pivotable implement carrier arrangement according to one or more of the preceding claims including a lifting apparatus characterised in that same is formed as a hydraulic cylinder (48) which engages a lift shaft (56) by way of a lift rocker arm (54).

6. A vertically pivotable implement carrier arrangement according to one or more of the preceding claims, characterised in that the front cowling (16) has openings corresponding to the path of movement of the upper and lower links (100, 102).

## Revendications

1. Dispositif pouvant pivoter verticalement pour le montage d'outils ou instruments, se raccordant à un canot avant de machine utilisable en agriculture, en particulier de tracteur agricole, et comportant deux barres ou bielles inférieures et au moins une barre supérieure, munies de points d'articulation prévus du côté du véhicule et du côté de l'outil ou instrument et recevant le cas échéant un cadre ou châssis d'accouplement, caractérisé par une disposition telle, des barres ou bielles (58, 64, 100, 102), que leurs points d'articulation (60, 66; 114, 122) prévus du côté de l'outil ou instrument puissent le cas échéant avec le cadre ou châssis d'accouplement (62), être amenés dans une position d'application contre le canot avant (16) ou dans une position d'effacement à l'intérieur de celui-ci.

2. Dispositif pouvant pivoter verticalement pour le montage d'outils ou instruments suivant la revendication 1, caractérisé en ce que le canot avant (16) comporte une cavité (70) pour la réception du cadre ou châssis d'accouplement (62).

3. Dispositif pouvant pivoter verticalement pour le montage d'outils ou instruments suivant une ou plusieurs des revendications précédentes, caractérisé en ce que la projection verticale des points d'articulation prévus du côté de l'outil ou instrument et du côté du véhicule (60, 66, 56, 58; 114, 122; 106, 124) forme un parallélogramme.

4. Dispositif pouvant pivoter verticalement pour le montage d'outils ou instruments suivant une ou plusieurs des revendications précédentes, caractérisé en ce que les barres ou bielles supérieures et inférieures (100, 102) sont disposées à l'intérieur d'un capot de moteur (14).

5. Dispositif pouvant pivoter verticalement pour le montage d'outils ou instruments suivant une ou plusieurs des revendications précédentes, comprenant un dispositif de relevage, caractérisé en ce que ce dispositif est constitué par un cylindre hydraulique (48) qui attaque un arbre de relevage (56) par l'intermédiaire d'un bras de relevage oscillant (54).

6. Dispositif pouvant pivoter verticalement pour le montage d'outils ou instruments suivant une ou plusieurs des revendications précédentes, caractérisé en ce que le capotage avant (16) comporte des orifices correspondant à la trajectoire de déplacement des barres ou bielles supérieures et inférieures (100, 102).

FIG.1

10

12

14

130

70

16

22

48

40   44

60

52

58

24

27

26

32

64

28

46  56   54

34

62

38

30

68

20

66

36

18

FIG. 3

FIG.2

72

70

74

62

64

FIG.4

FIG.5